# EUROPÄISCHE PATENTANMELDUNG

(11) **EP 4 183 548 A1**
(43) Veröffentlichungstag der Anmeldung: **24.05.2023**
(21) Anmeldenummer: 22020505.8
(22) Anmeldetag: 21.10.2022
(51) Int. Cl.: B29C 45/14

(54) **VERFAHREN ZUR HERSTELLUNG EINES DICHTUNGSELEMENTS, POSITIONIERELEMENT UND DICHTUNGSELEMENT MIT EINEM DERARTIGEN POSITIONIERELEMENT**

(30) Priorität: 28.10.2021 DE 102021128129
(71) Anmelder: CQLT SaarGummi Technologies S.à.r.l., 5544 Remich (LU)
(72) Erfinder: Samanci, Suleyman, 66687 Wadern-Nunkirchen (DE); Thome, Martin, 66839 Schmelz-Limbach (DE)
(74) Vertreter: Patentanwälte Bernhardt / Wolff Partnerschaft mbB

(57) **Zusammenfassung**

Die Erfindung betrifft ein Verfahren zur Herstellung eines Dichtungselements (1) zur Bildung einer Dichtung an einer Fahrzeugkarosserie bei dem an einen ersten Dichtungsteil (3) des Dichtungselements (1) ein weiterer Dichtungsteil (5; 6) des Dichtungselements (1) angespritzt wird. Um eine maßgenaue Fertigung und damit ein sehr passgenaues Dichtungselement (1) zu ermöglichen, wird während der Aufspannung des ersten Dichtungsteils (3) zum Anspritzen des weiteren Dichtungsteils (5; 6) eine Aufnahme für ein Positionierelement (2) gefertigt.

## Beschreibung

Die Erfindung betrifft ein Verfahren zur Herstellung eines Dichtungselements nach dem Oberbegriff des Anspruchs 1 sowie ein Positionierelement und ein Dichtungselement mit einem derartigen Positionierelement.

Durch Benutzung ist bekannt, ein Dichtungselement zur Bildung einer Dichtung an einer Fahrzeugkarosserie dadurch herzustellen, dass an einem ersten Dichtungsteil ein Positionierelement befestigt und anschließend das Positionierelement verwendet wird, um das erste Dichtungsteil beim Anspritzen eines weiteren Dichtungsteils und später bei der Montage des Dichtungselements an einer Fahrzeugkarosserie zu positionieren.

Aufgabe der Erfindung ist es, ein Verfahren zur Herstellung eines Dichtungselements zur Bildung einer Dichtung an einer Fahrzeugkarosserie bereitzustellen, welches eine besonders maßgenaue Fertigung und damit ein sehr passgenaues Dichtungselement ermöglicht.

Diese Aufgabe wird dadurch gelöst, dass während der Aufspannung des ersten Dichtungsteils zum Anspritzen eines weiteren Dichtungsteils eine Aufnahme für ein Positionierelement gefertigt, also hergestellt wird. Die Fertigung kann vorzugsweise durch Entfernung von Material erfolgen. Die Aufnahme ist damit besonders genau gegenüber dem angespritzten weiteren Dichtungsteil positioniert, so dass auch ein später in der Aufnahme befestigtes Positionierelement positionsgenau angeordnet ist.

Vorteilhaft kann es sich bei dem ersten Dichtungsteil um einen Profilstrangabschnitt, also ein beispielsweise durch Extrusion hergestelltes Profil aus einem elastomeren Material wie EPDM mit konstantem Querschnitt, handeln. Die Aufnahme für das Positionierelement kann in dem ersten Dichtungsteil, also dem Profilstrangabschnitt, angeordnet sein.

Eine besonders stabile Befestigung des Positionierelements wird dadurch erreicht, dass die Aufnahme durch mindestens ein Loch bzw. Langloch in dem ersten Dichtungsteil bzw. dem Profilstrangabschnitt beispielsweise durch Ausstanzen gebildet wird. Bei dem Loch bzw. Langloch kann es sich vorzugsweise um ein Durchgangsloch handeln.

Vor der Aufspannung zum Anspritzen des weiteren Dichtungsteils kann der erste Dichtungsteil einer Stanzbearbeitung, insbesondere an einem freien Ende, unterzogen werden, um beispielsweise entsprechende Kontaktflächen für das spätere Anspritzen des weiteren Dichtungsteils vorzusehen. Bei einem ersten Dichtungsteil in Form eines Profilstrangabschnitts kann die Stanzbearbeitung insbesondere an einem längsseitigen freien Ende erfolgen.

Für eine besonders genaue Anordnung des ersten Dichtungsteils in der Aufspannung zum Anspritzen des weiteren Dichtungsteils kann eine durch die Stanzbearbeitung gebildete Oberfläche des ersten Dichtungsteils als Anschlag zu Positionierung beispielsweise gegenüber der Spritzgussform verwendet werden. Hierdurch werden Volumenschwankungen in dem durch den Einspritzvorgang auszufüllenden Hohlraum innerhalb der Spritzgussform vermieden, da die entsprechende gestanzte Oberfläche des ersten Dichtungsteils immer positionsgenau den Hohlraum begrenzt.

In einer vorteilhaften Ausführungsform wird während oder nach der Aufspannung des ersten Dichtungsteils zum Anspritzen des weiteren Dichtungsteils ein Positionierelement an der Aufnahme befestigt. Das Positionierelement kann insbesondere dazu verwendet werden, das Dichtungselement positionsgenau an einer Fahrzeugkarosserie zu montieren. Hierzu kann das Positionierelement seitlich von dem beispielsweise als Profilstrangabschnitt ausgebildeten ersten Dichtungsteil vorstehen und beispielsweise in ein Loch in der Fahrzeugkarosserie eingreifen.

Das Positionierelement kann vorteilhaft formschlüssig an der Aufnahme gehalten werden. Als besonders vorteilhaft hat sich herausgestellt, das Positionierelement mehrteilig auszubilden, insbesondere mit zwei Teilen, wobei das erste Dichtungsteil oder das zweite Dichtungsteil vorzugsweise zwischen den Teilen des Positionierelements gehalten bzw. eingespannt wird. Zur Befestigung des Positionierelements an der Aufnahme kann insbesondere eine Klipsverbindung zwischen den Teilen des Positionierelements vorgesehen sein. Durch die Klipsverbindung wird eine einfach herstellbare und gegebenenfalls lösbare Rastverbindung zur formschlüssigen Befestigung des Positionierelements an dem Dichtungsteil ermöglicht.

Des Weiteren wird ein Positionierelement für ein Dichtungselement zur Bildung einer Dichtung an einer Fahrzeugkarosserie beansprucht, welches einen Befestigungsabschnitt und eine Positionierabschnitt umfasst. Das Positionierelement ist dadurch gekennzeichnet, dass der Befestigungsabschnitt mindestens einen Haltestift mit einem seitlich vorstehenden Vorsprung zum formschlüssig haltenden Hintergreifen einer Aussparung in einem Dichtungselement aufweist. Ein derartiges Positionierelement kann besonders einfach montiert und sicher haltend sowie positionsgenau an einem Dichtungselement befestigt werden.

Der mindestens eine Haltestift kann im Querschnitt ein Tannenbaumprofil aufweisen, also insbesondere mit mehreren seitlich vorstehenden Vorsprüngen, welche in einer Richtung vorzugsweise eine immer größere Länge aufweisen.

In einer besonders vorteilhaften Ausführungsform kann der Befestigungsabschnitt mehrere Haltestifte aufweisen, wobei die seitlichen Vorsprünge der Haltestifte vorzugsweise einstückig miteinander verbunden sind. Derartige in Form einer Brücke miteinander verbundene Vorsprünge ermöglichen ein großflächiges Hintergreifen mehrerer Aussparungen und damit eine sichere Befestigung des Positionierelements.

Für eine besonders einfache Montage kann das Positionierelement mehrteilig mit mindestens zwei miteinander verbundenen Teilen ausgebildet sein. Die Teile können durch eine formschlüssige Verbindung, beispielsweise durch mindestens eine elastisch federnde Rastnase, haltend miteinander verbunden sein. Eine derartige federnde Rastnase, welche in bekannter Weise einen Rastvorsprung hintergreift, ermöglicht eine besonders schnelle und sichere Verbindung der Teile des Positionierelements. Zusätzlich kann auch an einem Teil des Positionierelements ein Zentrierstift vorgesehen sein, welcher in eine korrespondierende Ausnehmung in dem gegenüberliegenden Teil des Positionierelements vorsteht und damit die Teile zueinander positioniert.

In einer vorteilhaften Ausführungsform können der Positionierabschnitt und der mindestens eine Haltestift an einem ersten Teil des Positionierelements und der mindestens eine seitliche Vorsprung an einem zweiten Teil des Positionierelements angeordnet sein. Hierdurch kann jeder Vorsprung besonders groß ausgebildet und damit das Dichtungsteil großflächig eingespannt werden, was zu einer besonders sicheren Befestigung des Positionierelements an dem Dichtungsteil führt.

Des Weiteren wird auch ein Dichtungselement zur Bildung einer Dichtung an einer Fahrzeugkarosserie mit einem Positionierelement zur Positionierung des Dichtungselements gegenüber der Fahrzeugkarosserie beansprucht. Das Dichtungselement ist dadurch gekennzeichnet, dass das Positionierelement wie zuvor beschrieben ausgebildet ist. Ein derartiges Dichtungselement kann besonders einfach hergestellt und zur Bildung einer Dichtung an einer Fahrzeugkarosserie positionsgenau befestigt werden.

Das Dichtungselement kann dabei ein erstes Dichtungsteil in Form eines Profilstrangabschnitts, an welchem das Positionierelement befestigt ist, sowie ein an den Profilstrangabschnitt angespritztes weiteres Dichtungsteil aufweisen. Derartige Dichtungselemente können beispielsweise zur Abdichtung von Fensterscheiben verwendet werden und eignen sich insbesondere auch für kleinere Radien in Eckbereichen.

Bei einem derartigen Dichtungselement kann das Positionierelement vorzugsweise durch mindestens eine Aussparung in Form eines Durchgangslochs hindurch den Profilstrangabschnitt haltend hintergreifen, wodurch sich eine besonders stabile gegenseitige Befestigung ergibt.

Zudem wird auch eine Vorrichtung, insbesondere zur Durchführung des vorgenannten Verfahrens, beansprucht, welche eine Aufspanneinrichtung zur Halterung eines ersten Dichtungsteils und eine mehrteilige Spritzgussform zum Anspritzen eines weiteren Dichtungsteils an das erste Dichtungsteil umfasst. Die Vorrichtung ist gekennzeichnet durch eine Einrichtung zur Erzeugung einer Aufnahme für ein Positionierelement. Die Aufnahme wird vorzugsweise in dem ersten Dichtungsteil gebildet. Hierdurch kann noch während der Aufspannung des ersten Dichtungsteils besonders zeitsparend und positionsgenau die Aufnahme erzeugt werden. Die Aufpanneinrichtung kann dabei über einen Abschnitt der mehrteiligen Spritzgussform gebildet sein, in welchem das erste Dichtungsteil eingespannt werden kann.

Die Einrichtung zur Erzeugung einer Aufnahme kann ausgebildet sein, eine Aufnahme in Form mindestens einer Aussparung in dem ersten Dichtungsteil vorzusehen, insbesondere einer Aussparung mit einem geschlossenen Rand. Vorteilhaft kann es sich bei der Einrichtung zur Erzeugung einer Aufnahme um eine Stanzvorrichtung zum Ausstanzen mindestens eines Durchgangslochs in dem ersten Dichtungsteil handeln. Das Durchgangsloch weist dabei vorzugsweise einen geschlossenen Rand auf.

In einer bevorzugten Ausführungsform ist die Einrichtung zur Erzeugung einer Aufnahme positionsgenau an der Aufspanneinrichtung und/oder der Spritzgussform gegebenenfalls lösbar befestigt. Die Einrichtung zur Erzeugung einer Aufnahme kann besonders vorteilhaft in die Aufspanneinrichtung integriert sein, so dass die Aufnahme in einem eingespannten Abschnitt des ersten Dichtungsteils hergestellt werden kann. Hierzu kann die Aufspanneinrichtung und/oder die Spritzgussform mindestens einen Stempel einer Stanzvorrichtung und eine Führung für den Stempel umfassen. Die Führung kann so ausgebildet sein, dass der Stempel, wenn er in den Hohlraum zur Aufnahme des ersten Dichtungsteils vorsteht, mit dem vorstehenden Teil keinen Kontakt zu der Aufspanneinrichtung bzw. der Spritzgussform aufweist. Mit einem derartigen Stempel kann anders als bei einem Entfernen eines Randbereichs durch Stanzen eine Aufnahme mit einem geschlossenen Rand beispielsweise in Form eines Durchgangslochs in dem ersten Dichtungsteil erzeugt werden.

Weitere Besonderheiten und Vorzüge der Erfindung ergeben sich aus der folgenden Beschreibung bevorzugter Ausführungsbeispiele anhand der Zeichnungen. Es zeigen:
- Fig. 1a-d: verschiedene Herstellungsschritte eines Dichtungselements zur Bildung einer Dichtung an einer Fahrzeugkarosserie;
- Fig. 2: eine perspektivische Darstellung eines Positionierelements für das Dichtungselement von Figur 1;
- Fig. 3: eine Detailansicht des Positionierelements von Figur 2 und
- Fig. 4: einen Längsschnitt durch eine alternative Ausführungsform eines Positionierelements.

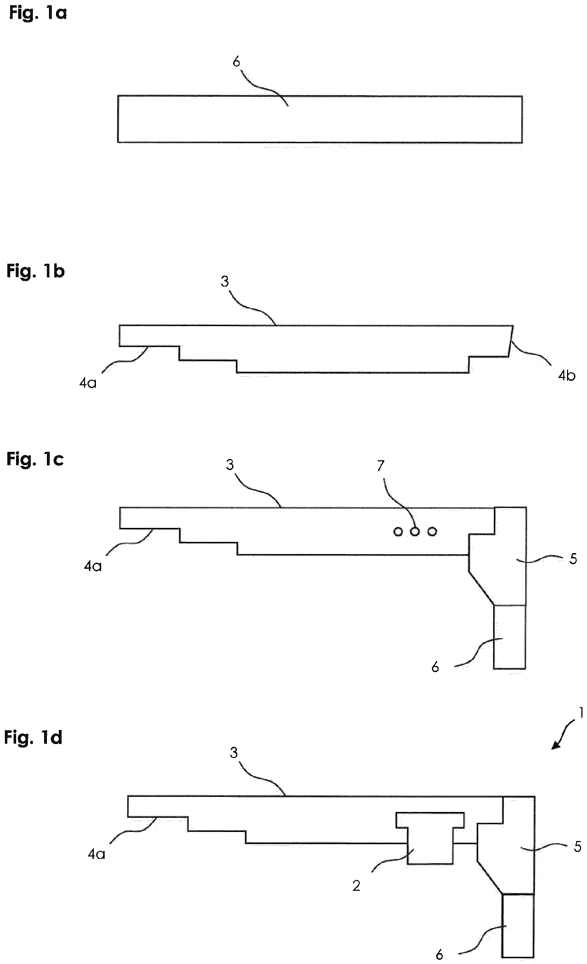

In den Figuren 1a bis 1d sind verschiedene Schritte eines Herstellungsverfahrens für ein Dichtungselement 1 mit einem Positionierelement 2 zur Bildung einer Dichtung an einer Fahrzeugkarosserie gezeigt. Das Dichtungselement 1 kann aus einem elastomeren Material wie EPDM oder TPE beispielsweise im Extrusionsverfahren und das Positionierelement 2 aus einem thermoplastischen Material wie PP oder PE beispielsweise im Spritzgussverfahren gebildet sein.

Gemäß dem Herstellungsverfahren wird an einem in Figur 1a gezeigten ersten Dichtungsteils 3 in Form eines Profilstrangabschnitts eine Stanzbearbeitung an den freien Enden und gegebenenfalls auch seitlich hiervon vorgenommen. Durch die Stanzbearbeitung ergeben sich die in Figur 1b gezeigten Kontaktflächen 4a, 4b.

Bei dem in Figur 1c gezeigten Herstellungsschritt wird das erste Dichtungsteil 3 in einer hier nicht dargestellten Spritzgussform mittels der durch Ausstanzen gebildeten Kontaktfläche 4b positioniert und eingespannt. Anschließend wird ein zweites Dichtungsteil 5, welches hier als Eckteil ausgebildet ist und ebenfalls aus EPDM gebildet sein kann, angespritzt. Durch das zweite Dichtungsteil 5 kann auch ein drittes Dichtungsteil 6 in Form eines weiteren Profilstrangabschnitts mit dem ersten Dichtungsteil 3 verbunden werden.

Während der Aufspannung des ersten Dichtungsteils 3 zum Anspritzen des weiteren Dichtungsteils 5 wird eine Aufnahme 7 in Form von mehreren Durchgangslöchern in dem ersten Dichtungsteil 3 beispielsweise durch Ausstanzen gebildet. Die Aufnahme 7 ist daher besonders präzise gegenüber dem zweiten Dichtungsteil 5 und dem dritten Dichtungsteil 6 positioniert.

Gemäß Figur 1d wird noch während der Aufspannung des ersten Dichtungsteils 3 zum Anspritzen des zweiten Dichtungsteils 5 oder nach der Entnahme des ersten Dichtungsteils 3 nach Abschluss des Anspritzvorgangs das Positionierelement 2 an der Aufnahme 7 befestigt. Die Ausgestaltung des Positionierelements 2 und die Art der Befestigung an dem ersten Positionierelement 2 werden in Bezug auf die nachfolgenden Figuren näher beschrieben.

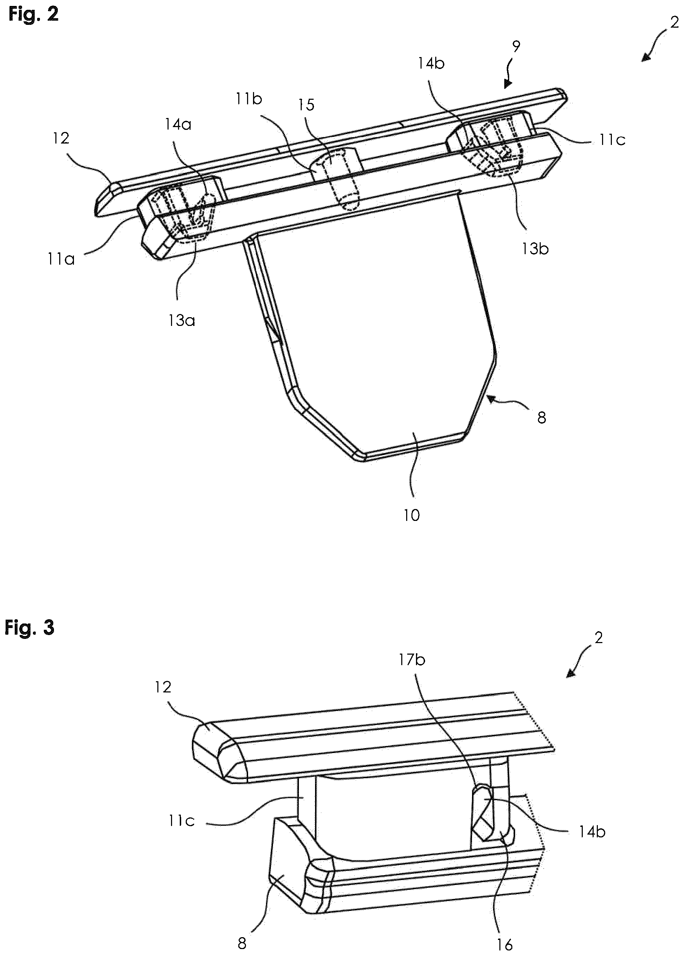

In Figur 2 ist eine perspektivische Darstellung des Positionierelements 2 für das Dichtungselement 1 gezeigt. Das Positionierelement 2 ist mehrteilig ausgebildet, um formschlüssig haltend an der Aufnahme 7 befestigt zu werden. Hierzu umfasst das Positionierelement 2 einen ersten Teil 8 und einen zweiten Teil 9, zwischen welchen das erste Dichtungsteil 3 eingespannt und gehalten werden kann.

Das erste Teil 8 des Positionierelements 2 umfasst einen Positionierabschnitt mit einem seitlich vorstehenden Steg 10, welcher zur genauen Positionierung des Dichtungselements 1 bei der späteren Montage an einer Fahrzeugkarosserie in eine entsprechende Aussparung in der Fahrzeugkarosserie eingesetzt werden kann. Der Positionierabschnitt grenzt an einen Befestigungsabschnitt an, welcher gemeinsam durch das erste Teil 8 und das zweite Teil 9 des Positionierelements 2 gebildet wird. An den ersten Teil 8 des Positionierelements 2 umfasst der Befestigungsabschnitt drei Haltestifte 11a, 11b, 11c, welche seitlich von dem Befestigungsabschnitt vorstehen und jeweils eine hier nicht dargestellte, zur Seite hin offene Ausnehmung aufweisen. Der Befestigungsabschnitt des Positionierelements 2 umfasst an dem zweiten Teil 9 einen Vorsprung 12, welcher seitlich von den Haltestiften 11a, 11b, 11c vorsteht und in Form einer einstückigen Brücke die Haltestifte 11a, 11b, 11c verbindet. Durch den seitlichen Vorsprung 12 kann die Aufnahme 7 in dem ersten Dichtungsteil 3, in welche die Haltestifte 11a, 11b, 11c vorstehen, formschlüssig haltend hintergriffen werden, sodass sich eine besonders stabile Befestigung des Positionierelements 2 an dem ersten Dichtungsteil 3 ergibt.

Für eine einfache Montage des Positionierelements 2 an dem ersten Dichtungsteil 3 ist das zweite Teil 9 mit dem ersten Teil 8 des Positionierelements 2 über eine mit gestrichelten Linien angedeutete Klipsverbindung formschlüssig haltend verbunden. Die Klipsverbindung umfasst jeweils einen Rasthaken 13a, 13b mit einer elastisch federnden Rastnase 14a, 14b. Die Rasthaken 13a, 13b mit den Rastnasen 14a, 14b stehen in die hier nicht gezeigten Ausnehmungen in den Haltestiften 11a, 11c vor und hintergreifen einen hier ebenfalls nicht gezeigten Rastvorsprung. Die Rastnasen 14a, 14b sind dabei zueinander ausgerichtet bzw. zeigen zueinander. Alternativ können die Rastnasen 14a, 14b auch voneinander weg oder in die gleiche Richtung ausgerichtet sein bzw. zeigen. In die Ausnehmung in dem mittig angeordneten Haltestift 11b steht ein Zentrierstift 15 vor, welcher das erste Teil 8 und das zweite Teil 9 des Positionierelements 2 zueinander positioniert. Durch die gezeigte Klipsverbindung können das erste Teil 8 und das zweite Teil 9 besonders einfach an den gegenüberliegenden Seiten des ersten Dichtungsteil 3 angeordnet und durch die Aufnahme 7 hindurch fest miteinander verbunden werden. Hierbei werden die Rastnasen 14a, 14b in bekannter Weise elastisch verformt und hintergreifen anschließend formschlüssig haltend in der Montageposition jeweils einen hier nicht gezeigten Rastvorsprung in den Haltestiften 11a, 11c.

In Figur 3 ist eine Detailansicht auf die Rückseite des Haltestifts 11c des Positionierelements 2 von Figur 2 gezeigt. Wie der Darstellung zu nehmen ist, ist der Haltestift 11c wie auch der nicht separat dargestellte Haltestift 11a seitlich offen ausgebildet, so dass die Rastnase 14b zu erkennen ist. Die entsprechende Aussparung 16 in dem Haltestift 11c wird bei der Herstellung durch ein verschiebbares Formteil der Spritzgussform gebildet und umfasst auch den hier gezeigten Rastvorsprung 17b, welcher von der Rastnase 14b haltend hintergriffen wird. Durch die seitliche Aussparung 16 kann folglich auch der Rastvorsprung 17b ohne Hinterschneidungen entformt werden, was eine kostengünstige Herstellung der Teile 8, 9 des Positionierelements 2 im Spritzgussverfahren ermöglicht.

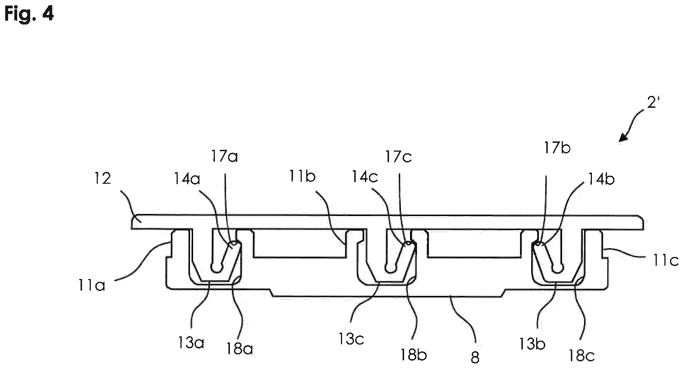

In Figur 4 ist ein Längsschnitt durch eine alternative Ausführungsform eines Positionierelements 2' gezeigt. Das Positionierelement 2' ist im Wesentlichen identisch zu dem zuvor beschriebenen Positionierelement 2 ausgebildet, so dass die Beschreibung hierzu auch für das Positionierelement 2 gilt. Der einzige Unterschied besteht darin, dass bei dem Positionierelement 2' in dem mittleren Haltestift 11b anstelle des zuvor beschriebenen Zentrierstifts 15 ebenfalls ein Rasthaken 13c mit einer Rastnase 14c vorgesehen ist. Wie auch bei dem Positionierelement 2 sind die Rasthaken 13a, 13b, 13c in entsprechenden Ausnehmung 18a, 18b, 18c in den Haltestiften 11a, 11b, 11c angeordnet und hintergreifen dort mit den Rastnasen 14a, 14b, 14c formschlüssig haltend korrespondierende Rastvorsprünge 17a, 17b, 17c.

### Bezugszeichenliste:

- 1: Dichtungselement
- 2,2': Positionierelement
- 3: Erstes Dichtungsteil
- 4a, 4b: Kontaktflächen
- 5: Zweites Dichtungsteil
- 6: Drittes Dichtungsteil
- 7: Aufnahme
- 8: Erstes Teil des Positionierelements
- 9: Zweites Teil des Positionierelements
- 10: Steg
- 11a, 11b, 11c: Haltestift
- 12: Seitlicher Vorsprung
- 13a, 13b, 13c: Rasthaken
- 14a, 14b, 14c: Rastnase
- 15: Zentrierstift
- 16: Aussparung
- 17a, 17b, 17c: Rastvorsprung
- 18a, 18b, 18c: Ausnehmung

## Patentansprüche

1. Verfahren zur Herstellung eines Dichtungselements (1) zur Bildung einer Dichtung an einer Fahrzeugkarosserie bei dem an einen ersten Dichtungsteil (3) des Dichtungselements (1) ein weiterer Dichtungsteil (5; 6) des Dichtungselements (1) angespritzt wird, **dadurch gekennzeichnet,**
**dass** während der Aufspannung des ersten Dichtungsteils (3) zum Anspritzen des weiteren Dichtungsteils (5; 6) eine Aufnahme (7) für ein Positionierelement (2; 2') gefertigt wird.

2. Verfahren nach Anspruch 1,
**dadurch gekennzeichnet,**
**dass** es sich bei dem ersten Dichtungsteil (3) um einen Profilstrangabschnitt handelt.

3. Verfahren nach Anspruch 1 oder 2,
**dadurch gekennzeichnet,**
**dass** die Aufnahme (7) für das Positionierelement (2; 2') in dem ersten Dichtungsteil (3) vorgesehen wird.

4. Verfahren nach einem der Ansprüche 1 bis 3,
**dadurch gekennzeichnet,**
**dass** die Aufnahme (7) durch Ausstanzen mindestens eines Lochs in dem Profilstrangabschnitt gebildet wird.

5. Verfahren nach einem der vorhergehenden Ansprüche,
**dadurch gekennzeichnet,**
**dass** das erste Dichtungsteil (3) vor der Aufspannung zum Anspritzen des weiteren Dichtungsteils (5; 6) einer Stanzbearbeitung, insbesondere an einem freien Ende, unterzogen wird.

6. Verfahren nach Anspruch 5,
**dadurch gekennzeichnet,**
**dass** eine durch die Stanzbearbeitung gebildete Oberfläche (4b) des ersten Dichtungsteils (3) als Anschlag zur Positionierung des ersten Dichtungsteils (3) in der Aufspannung zum Anspritzen des weiteren Dichtungsteils (5; 6) verwendet wird.

7. Verfahren nach einem der vorhergehenden Ansprüche,
**dadurch gekennzeichnet,**
**dass** während oder nach der Aufspannung des ersten Dichtungsteils (3) zum Anspritzen des weiteren Dichtungsteils (5; 6) ein Positionierelement (2; 2') an der Aufnahme (7) befestigt wird.

8. Verfahren nach Anspruch 7,
**dadurch gekennzeichnet,**
**dass** das Positionierelement (2; 2') formschlüssig an der Aufnahme (7) gehalten wird, insbesondere mehrteilig ausgebildet ist und das Dichtungsteil (3) zwischen den Teilen (8; 9) des Positionierelements (2; 2') gehalten wird.

9. Positionierelement (2; 2') für ein Dichtungselement (1) zur Bildung einer Dichtung an einer Fahrzeugkarosserie mit einem Befestigungsabschnitt und einem Positionierabschnitt,
**dadurch gekennzeichnet,**
**dass** der Befestigungsabschnitt mindestens einen Haltestift (11a; 11b; 11c) mit einem seitlich vorstehenden Vorsprung (12) zum formschlüssig haltenden Hintergreifen einer Aussparung (7) in einem Dichtungselement (1) aufweist.

10. Positionierelement (2; 2') nach Anspruch 9,
**dadurch gekennzeichnet,**
**dass** der Haltestift (11a; 11b; 11c) im Querschnitt ein Tannenbaumprofil aufweist.

11. Positionierelement (2; 2') nach Anspruch 9 oder 10,
**dadurch gekennzeichnet,**
**dass** der Befestigungsabschnitt mehrere Haltestifte (11a; 11b; 11c) aufweist und die seitlichen Vorsprünge (12) der Haltestifte einstückig miteinander verbunden sind.

12. Positionierelement (2; 2') nach einem der Ansprüche 9 bis 11,
**gekennzeichnet durch**
eine mehrteilige Ausgestaltung mit mindestens zwei miteinander verbundenen Teilen (8; 9).

13. Positionierelement (8; 9) nach Anspruch 12,
**dadurch gekennzeichnet,**
**dass** die Teile (8; 9) durch eine formschlüssige Verbindung, insbesondere mindestens eine elastisch federnde Rastnase (14a; 14b; 14c), haltend miteinander verbunden sind.

14. Dichtungselement(1) zur Bildung einer Dichtung an einer Fahrzeugkarosserie mit einem Positionierelement (2; 2') zur Positionierung des Dichtungselements (1) gegenüber der Fahrzeugkarosserie,
**dadurch gekennzeichnet,**
**dass** das Positionierelement (2; 2') nach einem der Ansprüche 9 bis 13 ausgebildet ist.

15. Vorrichtung, insbesondere zur Durchführung des Verfahrens nach einem der Ansprüche 1 bis 8, umfassend eine Aufspanneinrichtung zur Halterung eines ersten Dichtungsteils (3) und eine mehrteilige Spritzgussform zum Anspritzen eines weiteren Dichtungsteils (5; 6) an das erste Dichtungsteil (3), **gekennzeichnet durch**
eine Einrichtung zur Erzeugung einer Aufnahme (7) in dem ersten Dichtungsteil (3) für ein Positionierelement (2; 2').
